# EUROPEAN PATENT APPLICATION

(11) **EP 4 008 512 A2**
(43) Date of publication of application: **08.06.2022**
(21) Application number: 21211358.3
(22) Date of filing: 30.11.2021
(51) Int. Cl.: B29B 13/02, A23D 9/02, A23G 1/04, A23G 3/02

(54) **BLOCK MELTER**

(30) Priority: 01.12.2020 GB 202018895
(71) Applicant: Focus Food Equipment Limited, Gainsborough, Lincolnshire DN21 1QB (GB)
(72) Inventor: SHEEDY, Alan, Gainsborough DN21 1QB (GB)
(74) Representative: Swindell & Pearson Limited

(57) **Abstract**

a block melter (2) configured to melt blocks (5) of ingredient, the block melter comprising:
a grill arrangement (202) configured to apply heat to melt a block of the ingredient received from an entrance (210) of the block melter; and
a container (204) configured to collect molten ingredient from the melting block, wherein the grill arrangement comprises an upper grill (208) and a lower grill (206) configured to apply heat to the block from below and from above the block,
wherein the lower grill is sloped away from the entrance of the block melter to enable the block to slide along the lower grill, and
wherein the upper grill vertically converges towards the lower grill with increasing distance from the entrance, so that in use the block contacting the lower and upper grills is hindered from sliding further until the block reduces in volume and the block remains in continuous proximity to the upper grill.

## Description

### FIELD OF THE INVENTION

Examples of the present disclosure relate to a block melter for melting bulk quantities of ingredients. In various, but not necessarily all embodiments the block meter is configured to melt ingredients having a melting point lower than 100 Celsius, which includes fatty cooking ingredients, candle ingredients, cosmetic ingredients or the like.

### BACKGROUND TO THE INVENTION

A previous example of a block melter comprises a vertically-opening lid, a grill, and a container. The operator first opens the lid, revealing the grill beneath. The grill is a horizontal planar grill. The operator can place large, bulky blocks of the ingredient onto the grill until the entire surface area of the grill is used up. The operator of the previous block melter could choose to place smaller pieces of ingredient on the grill, but they have the option to place bulky blocks.

The surface temperature of the grill is above a melting temperature of the blocks, so the undersides of the blocks that are in contact with the grill start to melt. Gaps in the grill allow the molten ingredient from the blocks to drip through to a container below the grill.

The throughput of the melter depends on: the surface area of the grill; the operator's ability to keep the optimum amount of unmelted material above the grill; the height of the material above the grill (weight); the temperature of the grill; the heating capacity Kw and flowrate; the temperature of the material; and the melt rate. The melt rate depends on the heat exchange from the grill to the blocks. The operator will need to regularly open the lid and check whether enough melting has taken place so that new blocks can be added. When space is available, the operator will physically place new blocks on the grill one at a time.

### BRIEF DESCRIPTION OF VARIOUS EMBODIMENTS OF THE INVENTION

According to an aspect of the invention there is provided a block melter configured to melt blocks of ingredient, the block melter comprising:
a grill arrangement configured to apply heat to melt a block of the ingredient received from an entrance of the block melter; and
a container configured to collect molten ingredient from the melting block,
wherein the grill arrangement comprises an upper grill and a lower grill configured to apply heat to the block from below and from above the block,
wherein the lower grill is sloped away from the entrance of the block melter to enable the block to slide along the lower grill, and
wherein the upper grill vertically converges towards the lower grill with increasing distance from the entrance, so that in use the block contacting the lower and upper grills is hindered from sliding further until the block reduces in volume and the block remains in continuous proximity to the upper grill.

Optionally, the grill arrangement comprises gaps between elongate heating members, through which melt from the block is able to pass for collection by the container.

Optionally, the grill arrangement is configured to apply heat not exceeding 100 Celsius. The block melter can therefore be a type of block melter configured to melt an ingredient having a melting point of less than 100 Celsius.

Optionally, the block melter is configured to operate at one or more settable temperatures, including a temperature of less than 100 Celsius. The settable temperature or temperatures can include a temperature of less than 60 Celsius suitable for chocolate or similar. In some examples the block melter can have a plurality of settable temperatures.

Optionally, the entrance of the block melter comprises a throat into which the block can be fed.

Optionally, the lower grill is sloped at an angle of between approximately 2 degrees and approximately 30 degrees from horizontal.

Optionally, the upper grill is sloped away from the entrance so that in use the block remains in proximity to the upper grill while sliding along the lower grill.

Optionally, elongate heating members of the lower grill are oriented to slope away from the entrance to enable the block to slide along the elongate heating members under gravity while melting.

The angle of the grills depends upon the size of the melter, and the size of the blocks.

Optionally, a vertical separation between the upper grill and the lower grill is configurable.

Optionally, the container is configured so that in use, at least part of the grill arrangement below entrance-level is submerged in the molten ingredient when the container is filled past a threshold level.

Optionally, the block melter comprises an openable cover above the grill arrangement.

Optionally, the entrance of the block melter is accessible for inserting the block regardless of whether the cover above the grill arrangement is open or closed.

Optionally, the block melter comprises a closable entrance cover for closing the entrance.

According to an aspect of the invention there is provided a system comprising the block melter and a conveyor, wherein the conveyor is sloped towards the entrance of the block melter.

Optionally, the conveyor is a roller conveyor.

Optionally, the conveyor and the grill arrangement have a width configured to receive multiple columns of blocks to the block melter in parallel, and/or wherein the conveyor has a length configured to enable self-feeding of a column of blocks in series.

Optionally, the conveyor is detachable from the block melter for cleaning.

Optionally, the system comprises a preparation table adjacent the conveyor.

Optionally, the ingredient which the block melter is configured to melt comprises at least one of: chocolate; cocoa butter; cocoa paste; butter; fat; caramel; or wax.

According to an aspect of the invention there is provided a block melter configured to melt blocks of ingredient, the block melter comprising:
a grill arrangement configured to apply heat to melt a block of the ingredient received from an entrance of the block melter; and
a container configured to collect molten ingredient from the melting block,
wherein the grill arrangement is configured to apply heat to the block from more than one side of the block.

### BRIEF DESCRIPTION OF THE DRAWINGS

For a better understanding of various examples of embodiments of the present invention reference will now be made by way of example only to the accompanying drawings in which:
FIG. 1 illustrates an example of a system comprising a block melter, viewed from the side;
FIG. 2 illustrates the block melter viewed from an end;
FIG. 3 illustrates a cross-section of an example grill arrangement configured to apply heat to a block from more than one side of the block; and
FIG. 4 illustrates an example of a fluid grill heating system.

### DETAILED DESCRIPTION OF VARIOUS EMBODIMENTS OF THE INVENTION

The Figures illustrate examples of a block ingredient melter 2 configured to melt blocks 5 of ingredient having a melting point lower than 100 Celsius, the block melter 2 comprising: a grill arrangement 202 configured to apply heat to melt a block 5 of the ingredient received from an entrance 210 of the block melter 2; and a container 204 configured to collect molten ingredient from the melting block 5, wherein the grill arrangement 202 is configured to apply heat to the block 5 from more than one side of the block 5.

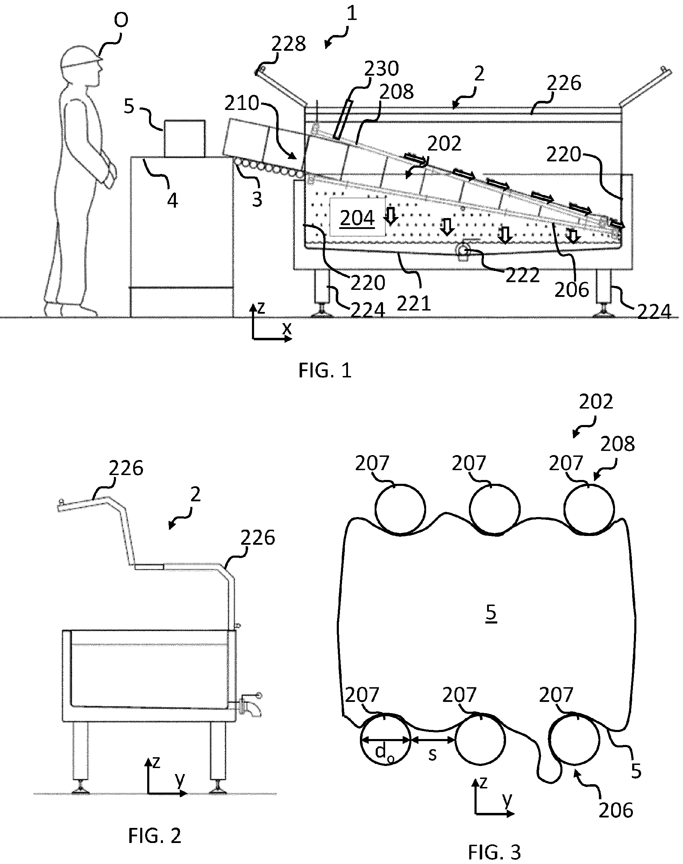

FIG. 1 illustrates an example of a block melting system 1 viewed from the side. FIG. 2 illustrates the same system 1 viewed from an end. The x-axis is a horizontal longitudinal axis. The y-axis is a horizontal orthogonal lateral axis. The z-axis is a vertical orthogonal axis.

The system 1 comprises the block melter 2 comprising the grill arrangement 202 and the container 204. Optionally, the system 1 further comprises a conveyor 3 adjacent the entrance 210 of the block melter 2. Optionally, the system 1 further comprises a preparation table 4 adjacent the conveyor 3.

First, the block melter 2 is described. Initially, the grill arrangement 202 is described. Then, the container 204 is described. Then, other elements of the block melter 2 are described.

The grill arrangement 202 in this example is configured to apply heat from beneath the block 5 and from above the block 5, to increase the melt rate and therefore increase throughput without requiring a greater footprint area of the block melter 2. The grill arrangement 202 comprises not only a lower grill 206 but also an upper grill 208.

In at least some examples the grill arrangement 202 comprises a conductive grill, configured so that the blocks 5 are directly in contact with the heated elements of the grill arrangement 202.

FIG. 3 illustrates a specific example of the lower grill 206 and the upper grill 208. The lower grill 206 can be a conductive grill as shown. The upper grill 208 can be a conductive grill as shown.

The grill arrangement 202 of FIG. 3 comprises elongate heating members 207 such as pipes. The elongate heating members 207 may extend in parallel to each other. The elongate heating members 207 may extend in a straight line. The elongate heating members 207 may be at substantially a same height as each other as shown, occupying a common two-dimensional plane.

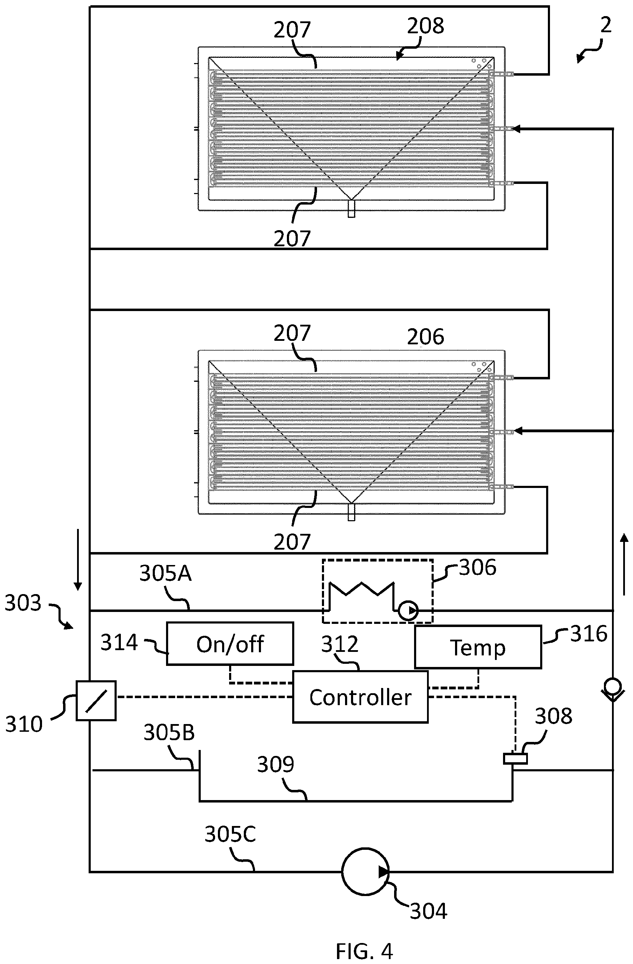

The elongate heating members 207 are configured to apply heat to the block 5. For example, the elongate heating members 207 may be filled with a heated fluid such as hot water, as shown in FIG. 4. The elongate heating members 207 can comprise a material with a high thermal conductivity, such as a metallic material. The metallic material may be a hygienic and easily-cleanable material such as stainless steel (e.g. SAE 316L grade) or a hygienically coated material.

Each illustrated elongate heating member 207 is non-flat in cross-section, at least where the block 5 is contacted. For example, FIG. 3 shows that each elongate heating member 207 comprises a cylindrical cross-sectional shape. Alternatively, the elongate heating members 207 can comprise polygonal cross-sectional shapes. The melting block 5 deforms around the elongate heating members 207, resulting in groove-like channels in the surface of the block 5. The non-flat shape of the elongate heating members 207 maximises heat transfer through the grooves in the surface of the block, due to the high conductive surface area.

The nominal/equivalent outer diameter dₒ of each elongate heating member 207 can be from approximately 1.5 centimetres to approximately four centimetres (e.g. 0.75 inches to 1.5 inches). In an example, dₒ = approximately one inch (2.54 centimetres) which is a standard size.

At least in the case of the lower grill 206, the elongate heating members 207 are spaced apart from each other to reveal gaps therebetween. This allows the molten ingredient to pass through the lower grill 206 by dripping, for collection in the container 204.

The average spacing s between neighbouring elongate heating members 207 can be less than dₒ to ensure that non-molten chunks are less likely to fall through into the container 204. In an example, s<50% of dₒ which is suitable for a variety of ingredients. In a more specific example, s < 25% of dₒ to maximise heat transfer. In an example s is approximately 18% of dₒ (e.g. s=4.6mm when dₒ=2.54 centimetres). In some examples s can be no less than approximately 3mm for ease of fabrication, for example so that a tig welder can access the crevices between the tubes.

The grill arrangement 202 does not have to be horizontal. In FIG. 1, the plane of the lower grill 206 is visibly inclined at a slope angle relative to the horizontal ground x-axis. The lower grill 206 slopes away from the entrance 210 of the block melter 2, wherein the entrance 210 is located towards one side of the block melter 2. Therefore, when a block 5 is received by the lower grill 206 at the entrance 210, the block 5 is able to slide under gravity to create space for the addition of more blocks 5 at the entrance 210.

The sliding of a block 5 is facilitated by the slope angle of the lower grill 206 and by the friction of the lower grill 206 and the ingredient. The friction of the lower grill 206 can be reduced by orienting the elongate heating members 207 of the lower grill 206 parallel to the direction of the slope, so that the block 5 can slide along the elongate heating members 207. Lubrication is provided by a layer of molten ingredient at the contact point with the elongate heating members 207.

The slope angle of the lower grill 206 can be between approximately two degrees and approximately 30 degrees from horizontal, depending on the friction. An angle which is much greater could increase the required height of the entrance 210 of the block melter 2, necessitating a platform for operators. An angle of less than two degrees may result in slow sliding and/or may limit the ingredients to self-lubricating ingredients (e.g. fat, chocolate). In a specific example, the slope angle can be at least approximately 10 degrees from horizontal.

The upper grill 208 may be sloped too, so that the separation of the lower grill 206 from the upper grill 208 does not increase with increasing x-axis distance from the entrance 210.

In at least some examples, the upper grill 208 can be sloped at a greater angle than the lower grill 206. This is to ensure that as the volume of the melting block 5 decreases, the block 5 remains in close proximity/contact with the upper grill 208. FIG. 1 shows that the upper grill 208 slopes away from the entrance 210 at a greater slope angle than the lower grill 206, resulting in a taper (convergence) of the upper grill 208 towards the lower grill 206 with increasing x-axis distance from the entrance 210.

The slope angle of the upper grill 208 can be greater than the slope angle of the lower grill 206, and within the above range of approximately 2 degrees to approximately 30 degrees from horizontal.

In some examples the slope angle of the upper grill 208 is configurable by an operator O, for example via a lifting mechanism 230 such as a lifting screw. The lifting mechanism 230 allows the block melter 2 to be reconfigured for different-height blocks 5. The lifting mechanism 230 could allow the upper grill 208 to be removed to facilitate cleaning of the upper and/or lower grills 206, 208.

Additionally or alternatively, the lifting mechanism 230 could translate the position of the upper grill 208. In another embodiment, the lifting mechanism 230 acts on the lower grill 206. In a further embodiment, the angle and/or position of both of the lower grill 206 and the upper grill 208 are independently configurable.

At the entrance 210, the height separation (z-axis) of the lower grill 206 and the upper grill 208 can be in the order of tens of centimetres and greater than the height of a pre-melted block 5. In an example, the height at the entrance 210 can be at least approximately 20 centimetres. At the opposite end furthest from the entrance 210, the height separation can be less than half of the entrance 210 height separation and less than the height of a pre-melted block 5.

An effect of the convergence of the lower and upper grills 206, 208 is that the distance by which a block 5 is able to slide under gravity is inversely proportional to the volume of the block 5 due to the ever-decreasing vertical space between the lower and upper grills 206, 208. The volume of the block 5 is inversely proportional to temperature and melting time. Therefore, the application of heat induces gravity self-feeding, and more heat increases the rate of self-feeding.

FIG. 4 schematically illustrates an example of a fluid-based grill heating system, for pumping heated fluid through the grill arrangement 202. The fluid could be water or any other suitable fluid with a good heat capacity that does not boil in a low-pressure circuit.

The grill heating system comprises a fluid circuit 302 for circulating hot fluid through the grill arrangement 202. The lower and upper grills 206, 208 are shown as two parallel branches of the fluid circuit 302. Alternatively, the lower and upper grills 206, 208 could be connected in series. For instance, the lower grill 206 could receive the hottest fluid.

The lower grill 206 comprises a plurality of parallel fluid passages, each corresponding to one of the elongate heating members 207. The elongate heating members 207 of the lower grill 206 are fluidly interconnected in series as shown (or in parallel).

FIG. 4 shows the lower grill 206 comprising tens of elongate heating members 207 for illustrative purposes. Tens of elongate heating members 207 is suitable for a high throughput. In other implementations, more or fewer elongate heating members 207 are provided.

The elongate heating members 207 of the upper grill 208 are fluidly interconnected to each other in series as shown (or in parallel).

FIG. 4 shows the upper grill 208 comprising tens of elongate heating members 207 for illustrative purposes. Tens of elongate heating members 207 is suitable for a high throughput. In other implementations, more or fewer elongate heating members 207 are provided.

FIG. 4 also illustrates a temperature control system 303 for regulating the temperature of the grill arrangement 202. The illustrated temperature control system 303 comprises a process heater 306 (e.g. process water heater) for heating the fluid to heat the grill arrangement 202, and one or more other optional components.

The process heater 306 can be an electrically-heated or gas-heated fluid heat exchanger, for example. The process heater 306 can have a heating power of greater than 5kW. In an example, the process heater 306 comprises approximately 18kw of heating power. Others may vary, lower or higher. An example process heater 306 can be atmospheric at max 95 Celsius. In other examples the heater 306 is a pressurized unit.

As illustrated, the fluid circuit 302 can comprise a source of hot fluid and a source of cooler fluid that can be mixed by appropriate means such as a controllable valve 310 (e.g. solenoid valve).

The source of hot fluid can comprise a first path 305A of the fluid circuit 302 that comprises the process heater 306.

Optionally, and as illustrated, the source of cooler fluid can comprise a second parallel path 305B of the fluid circuit 302, the second path comprising a holding heater 309 configured to hold the molten ingredient in the container 204 in a molten state. In some examples, the holding heater 309 comprises fluid jackets, wherein the container 204 is a jacketed vessel. The fluid entering the holding heater 309 is the fluid output from the grills 206, 208. The fluid exiting the holding heater 309 is at a cooler temperature due to heat transfer into the container 204, and is therefore cooler than the fluid exiting the process heater 306. The fluid exiting the holding heater 309 can rejoin the fluid exiting the process heater 306.

The ratio of fluid circulating through the first path 305A relative to the second path 305B can be controlled by the valve 310.

FIG. 4 also shows one or more pumps, such as a pump in the process heater 306, and a pump 304 in a third parallel path 305C of the fluid circuit 302.

If the temperature control system 303 is configured to regulate temperature using feedback, e.g. via a closed loop control scheme, a fluid temperature sensor 308 could be provided to indicate the temperature of the grill arrangement 202.

The fluid temperature sensor 308 could output a fluid temperature indication to a controller 312. The controller 312 could either be supplied with the system 1 or could be external and belonging to the operator O. The controller 312 could implement a control scheme such as a proportional-integral (PI) or a proportional-integral-differential (PID) scheme, or any other suitable scheme for regulating temperature of the grill arrangement 202. The controller 312 could control the valve 310 in dependence on the fluid temperature indication to regulate the temperature of the fluid. Additionally or alternatively, the controller 312 could control the pump 304 and/or the process heater 306 in dependence on the fluid temperature indication.

Implementation of a controller 312 may be as controller circuitry. The controller 312 may be implemented in hardware alone, have certain aspects in software including firmware alone or can be a combination of hardware and software (including firmware). The controller 312 can comprise at least one processor, at least one memory including computer program code, the at least one memory and the computer program code configured to, with the at least one processor, cause the controller 312 to implement the control scheme.

FIG. 4 also illustrates human-machine interfaces. The human-machine interfaces comprise an on/off interface 314. In some examples, the block melter 2 is configured to operate at a predetermined temperature that cannot be changed by the end user. The predetermined temperature can be a value greater than the melting point of the required ingredient. In some examples the predetermined temperature is less than 100 Celsius.

In some examples, a human-machine interface in the form of a temperature selector 316 is provided. The temperature selector 316 may be configured to enable end user selection from a plurality of temperatures. Some or all of the settable temperatures may be less than 100 Celsius. A settable temperature of less than 60 Celsius (but more than 45 Celsius) would be suitable for various ingredients such as: chocolate; cocoa butter; cocoa paste; butter; fat; or wax. The temperature selector 316 may further be configured to enable the selection of temperatures that are higher than 50 Celsius, which is suitable for caramel, some types of fat and some types of wax.

Moving on from the grill arrangement 202, the container 204 is now described. FIGS. 1 and 2 illustrate the container 204. The container 204 can be positioned beneath the grill arrangement 202 as shown, so that molten ingredient can drip straight into the container 204 without the need for a conduit. In another embodiment, the container 204 is elsewhere. The present example is space-efficient.

The container 204 can be longer in the x-axis than it is wide in the y-axis, to match the grill arrangement 202 which can also be longer in the x-axis than it is wide in the y-axis. The length and width of the container 204 can match or slightly exceed the length and width of the grill arrangement 202.

The grill arrangement 202 could be removable from the container 204 for cleaning access. The removal may be possible with appropriate lifting equipment.

The container 204 comprises side walls 220 and a base 221. The overflow point of the container 204 can correspond to the tops of the side walls 220. The overflow point could even correspond to the level of the entrance 210. The holding capacity of the container 204 up to the overflow point can be at least 20 kilograms but no more than 10 000 kilograms. In an implementation, the holding capacity is approximately 1000 kilograms.

In some examples the block melter 2 can be fitted with a level sensor set (not shown) to ensure the container 204 doesn't overflow by either causing an alert to be rendered or automatically stopping melting (e.g. cutting off heat to the grills).

The container 204 can comprise an outlet 222 as shown. The outlet 222 can be controlled by a valve such as a spigot. The illustrated spigot is a tap valve. The valve could be a manual value, or alternatively could be an automated valve controlled by a fluid level sensor.

The outlet 222 can be located on the side wall 220 rather than beneath the base 221, for ease of access. However, the outlet 222 may be located no more than 2-3 centimetres above the level of the base 221, to ensure maximum drainage.

The base 221 can be sloped towards the outlet 222 to promote drainage, as shown in FIG. 1.

The container 204 can be elevated above ground level so that the outlet 222 is high enough that an extraction means can be connected beneath the outlet 222. FIG. 1 shows a bucket 6. In order to elevate the container 204, the block melter 2 can comprise legs 224 as shown. The legs 224 can be height-adjustable, for example by threaded feet as shown, or alternatively by telescopic feet with latching positions. The legs 224 could be at least 30 centimetres long in an implementation.

The container 204 may comprise a holding heater (e.g. fluid jacket 309 of FIG. 4) configured to hold the molten ingredient in the container 204 in a molten state. The holding heater can be configured to maintain a holding temperature not more than the melting temperature of the grill, and optionally less than the temperature of the grill. In some examples the holding heater can comprise a secondary circuit configured to be fed heated fluid from the fluid circuit 302 via a mixing valve (not shown). The mixing valve can be configured to control a lower temperature than the melting temperature of the grill

In at least some examples, at least a portion of the grill arrangement 202 can be positioned so that when the container 204 is filled above a threshold level, the portion of the grill arrangement 202 becomes submerged in the molten ingredient. This means that any unmelted ingredient in the grill arrangement 202 will be heated not only by the grill arrangement 202, but also by the slightly-hotter molten ingredient. This increases the rate of melting. As the level of the molten liquid rises in the container 204, more of the grill arrangement 202 will be submerged, thereby providing a beneficial positive feedback loop that accelerates the throughput of the block melter 2.

In an example, if the grill arrangement 202 is sloped away from the entrance 210/overflow point as shown in FIG. 1, the lowest point of the lower grill 206 can be positioned to be submerged when the container 204 is filled past a first threshold fill level. The first threshold fill level is a depth corresponding to a fill volume between approximately 5%-filled and approximately two-thirds filled, depending on the use case.

The lowest point of the upper grill 208 may likewise become submerged when the container 204 is filled past a second threshold fill level, slightly greater than the first threshold level but still within the above range 5% to two-thirds filled.

Moving on from the container 204, other parts of the block melter 2 are described.

The block melter 2 can comprise an openable cover 226 above the grill arrangement 202, as shown in FIGS. 1-2. The openable cover 226 is for inspection, viewing the level in the container 204, cleaning, or maintenance.

The openable cover 226 can be horizontally hinged and can swing upwardly as shown in FIG. 2, in the manner of a gullwing door. The hinge axis could be parallel to the longitudinal x-axis. The hinges could be supported by a part of the structure of the block melter 2 that runs longitudinally above the grill arrangement 202.

As shown in FIG. 2, a block melter 2 could comprise a pair of the openable covers 226, in the manner of left and right gullwing doors. One opens clockwise and the other opens anti-clockwise. This reduces the maximum height clearance required above the block melter 2.

An openable cover 226 can be manually latched and unlatched, and/or can be manually opened and closed. In some examples, the openable cover 226 can be automatically latched and unlatched, and/or automatically opened and closed, via one or more actuators (not shown). In some examples, at least one gas spring is provided to regulate movement of the openable cover 226.

Unlike a previous block melter 2, the openable covers 226 do not cover the entrance 210 when they are closed. The entrance 210 of the block melter 2 could be a side entrance as shown in FIG. 1, so that blocks 5 can enter from a substantially horizontal direction rather than being lowered. Therefore, the entrance 210 of the block melter 2 can be considered to be a throat into which blocks 5 can be fed in a substantially horizontal direction.

The block melter 2 could comprise a separate entrance cover 228 for closing the entrance 210. The entrance cover 228 can be closed when the block melter 2 is not in use, or after all the blocks 5 have been added to reduce heat dissipation through the entrance 210. FIG. 1 shows a horizontally-hinged entrance cover 228 that swings down to cover the entrance 210. Alternatively, the entrance cover 228 could swing in another direction.

The entrance cover 228 can be manually latched and unlatched, and/or can be manually opened and closed. In some examples, the entrance cover 228 can be automatically latched and unlatched, and/or automatically opened and closed, via one or more actuators (not shown).

The height of the entrance 210 of the block melter 2 can be less than 1.5 metres above horizontal ground, and is therefore manually reachable without a requirement for a staircase or stepladder. The entrance cover 228 is also manually reachable.

Moving on from the block melter 2, the conveyor 3 adjacent the entrance 210 of the block melter 2 is now described. The conveyor 3 is visible in FIG. 1. The conveyor 3 is configured to receive blocks 5 from the operator O. For example, the operator O could place blocks 5 on the conveyor 3 or slide blocks 5 onto the conveyor 3 from a preparation table 4. The conveyor 3 is configured to convey the blocks 5 to the entrance 210 of the block melter 2 and into the grill arrangement 202 without operator intervention.

The conveyor 3 can be sloped towards the entrance 210 of the block melter 2, so that the blocks 5 can be fed through the entrance 210 under gravity. The conveyor 3 can be a roller conveyor as shown, to facilitate movement of the blocks 5.

Due to the combination of a sloped grill arrangement 202 and a conveyor 3, an operator O can line up a column of blocks 5 on the conveyor 3, and the blocks 5 are self-fed through the entrance 210 in series. The rate of self-feeding depends on the rate of melting. The length of the conveyor 3 can be at least 30 centimetres or any other length to suit the application.

The minimum width of the entrance 210 and the grill arrangement 202 (and the conveyor 3 if provided) can be wide enough that a plurality of parallel columns of blocks 5 can be fed to the grill arrangement 202 at the same time.

The conveyor 3 can be releasably attachable to the block melter 2 to enable removal for cleaning, and to enable precise alignment relative to the entrance 210 via attachment. The conveyor 3 could be on a wheeled cart (not shown), the cart being detachable from the block melter 2.

Moving on from the conveyor 3, the preparation table 4 is now described. The preparation table 4 provides a horizontal surface on which an operator O can prepare and align blocks 5 of ingredient. For example, an operator O could unpackage ingredients and/or slice ingredients into blocks 5. The preparation table 4 could be releasably attachable to the conveyor 3 or could be permanently attached to the conveyor 3. The height of the preparation table 4 depends on the height of the entrance 210 and the angle of the conveyor 3. A step for the operator O to stand on could be provided if the preparation table 4 is at a high position. However, the preparation table 4 should be less than 1.5 metres above ground level to avoid the need for a more complex structure.

The various examples described above enable a greater melt rate per square metre of footprint than a single-grill melter

The various examples described above can be configured to melt various ingredients that melt at low temperatures not more than 100 Celsius. The grill temperature will be a few degrees higher than the melting point. Examples include:
1) Chocolate (e.g. milk, white, plain, dark, ruby). Melting point = 30-35C.
2) Cocoa butter. Melting point = 30-35C.
3) Cocoa paste, sometimes referred to as cocoa liquor. Melting point = 30-35C.
4) Compounds (chocolate like materials which are not real chocolate due to the absence or very low proportion of cocoa butter & cocoa solids). Melting point = similar to above.
5) Butter. Melting point = 32-35C.
6) Fats. Melting point = 33-55C depending on the type of fat.
7) Caramel blocks. Melting point = 95-99C.
8) Wax. Melting point = 45-65C.
9) Paraffin wax. Melting point = 45-65C.
10) Ingredients for various cosmetic products, having a similarly low melting point to the examples described above.

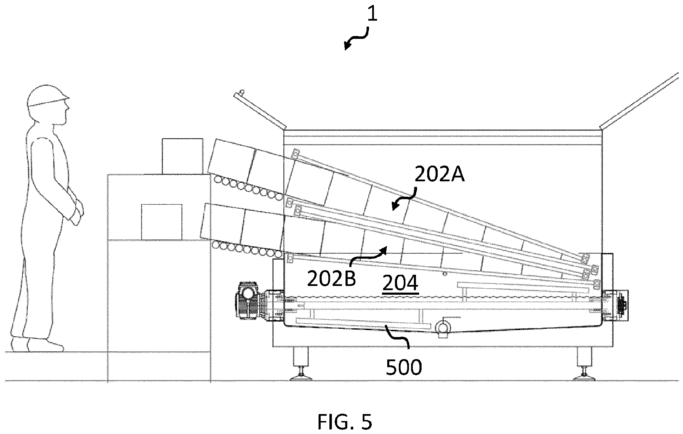

FIG. 5 illustrates a further example of the block melter 2. This block melter 2 comprises a plurality of grill arrangements 202A, 202B to increase throughput. Each of the plurality of grill arrangements 202A, 202B has a different entrance. The grill arrangements 202A, 202B may be vertically tiered. The same container 204 may collect melt from both grill arrangements 202A, 202B.

Additionally, or alternatively, the block melter 2 may comprise a stirrer 500 as shown in FIG. 5. The stirrer 500 is useful for materials which are suspensions. The stirrer 500 may be in the container 204. The stirrer 500 may comprise an agitator.

Although embodiments of the present invention have been described in the preceding paragraphs with reference to various examples, it should be appreciated that modifications to the examples given can be made without departing from the scope of the invention as claimed. A non-exhaustive list includes:
- The block melter 2 could comprise one or more side grills configured to heat the block 5 from its left and/or right sides. The upper grill 208 could be included or omitted.
- The block melter 2 could comprise horizontal grills rather than sloped grills, if self-feeding is not important.
- At least part of the fluid grill arrangement 202 could be replaced by non-fluid alternatives, or even alternatives to conductive grills. Examples include heated solid thermal conductors, convective grills (e.g. hot air blowers), radiative grills (e.g. infrared, resonant), or induction heaters. The fluid grill arrangement has been found to be the most controllable, reliable and hygienic solution.
- Depending on the type of grill arrangement 202, a grill could comprise a plurality of transverse rollers like the roller conveyor 3, to allow the blocks 5 to slide away from the entrance 210.
- The block melter 2 could melt ingredients having melting points higher than 100 Celsius. For example, the grill could contain pressurized water or steam, or hot oil.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavoring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A block melter configured to melt blocks of ingredient, the block melter comprising:
a grill arrangement configured to apply heat to melt a block of the ingredient received from an entrance of the block melter; and
a container configured to collect molten ingredient from the melting block,
wherein the grill arrangement comprises an upper grill and a lower grill configured to apply heat to the block from below and from above the block,
wherein the lower grill is sloped away from the entrance of the block melter to enable the block to slide along the lower grill, and
wherein the upper grill vertically converges towards the lower grill with increasing distance from the entrance, so that in use the block contacting the lower and upper grills is hindered from sliding further until the block reduces in volume and the block remains in continuous proximity to the upper grill.

2. The block melter of claim 1, wherein the grill arrangement comprises gaps between elongate heating members, through which melt from the block is able to pass for collection by the container.

3. The block melter of claim 1 or 2, wherein the block melter is configured to operate at one or more settable temperatures, including a temperature of less than 100 Celsius.

4. The block melter of any preceding claim, wherein the entrance of the block melter comprises a throat into which the block can be fed.

5. The block melter of any preceding claim, wherein the lower grill is sloped at an angle of between approximately 2 degrees and approximately 30 degrees from horizontal.

6. The block melter of any preceding claim, wherein the upper grill is sloped away from the entrance so that in use the block remains in proximity to the upper grill while sliding along the lower grill.

7. The block melter of any preceding claim, wherein elongate heating members of the lower grill are oriented to slope away from the entrance to enable the block to slide along the elongate heating members under gravity while melting.

8. The block melter of any preceding claim, wherein a vertical separation between the upper grill and the lower grill is reconfigurable.

9. The block melter of any preceding claim, wherein the container is configured so that in use, at least part of the grill arrangement below entrance-level is submerged in the molten ingredient when the container is filled past a threshold level.

10. The block melter of any preceding claim, wherein the continuous proximity to the upper grill comprises continuous contact with the upper grill.

11. The system of any preceding claim, wherein the ingredient which the block melter is configured to melt comprises at least one of: chocolate; cocoa butter; cocoa paste; butter; fat; caramel; or wax.

12. A system comprising the block melter and a conveyor, wherein the conveyor is sloped towards the entrance of the block melter.

13. The system of claim 12, wherein the conveyor is a roller conveyor.

14. The system of claim 12 or 13, wherein the conveyor and the grill arrangement have a width configured to receive multiple columns of blocks to the block melter in parallel, and/or wherein the conveyor has a length configured to enable self-feeding of a column of blocks in series.

15. The system of claim 12, 13 or 14, wherein the conveyor is detachable from the block melter for cleaning.
